# EUROPEAN PATENT SPECIFICATION

(11) **EP 1 096 150 B1**
(45) Date of publication and mention of the grant of the patent: **04.02.2004**
(21) Application number: 00309540.3
(22) Date of filing: 30.10.2000
(51) Int. Cl.: F04C 18/02

(54) **Scroll machine**
Spiralmaschine
Machine à spirales

(30) Priority: 01.11.1999 US 431191
(43) Date of publication of application: 02.05.2001
(73) Proprietor: COPELAND CORPORATION, Sidney Ohio 45365-0669 (US)
(72) Inventor: Clendenin, Harry Burns, Sidney, Ohio 45365 (US); Gundermann, James Edward, Warren, Pennsylvania 16365 (US); Vittal, Maheshram, Philadelphia, Pennsylvania 19102 (US)
(74) Representative: Price, Nigel John King

(56) References cited:
- EP-A- 0 317 270
- PATENT ABSTRACTS OF JAPAN vol. 1996, no. 01, 31 January 1996 (1996-01-31) -& JP 07 233790 A (HITACHI LTD), 5 September 1995 (1995-09-05)
- PATENT ABSTRACTS OF JAPAN vol. 1997, no. 03, 31 March 1997 (1997-03-31) -& JP 08 312542 A (HITACHI LTD), 26 November 1996 (1996-11-26)
- PATENT ABSTRACTS OF JAPAN vol. 1995, no. 11, 26 December 1995 (1995-12-26) -& JP 07 224770 A (NIPPONDENSO CO LTD), 22 August 1995 (1995-08-22)

## Description

### Field of the Invention

The present invention relates to a scroll member for a scroll machine. More particularly, the present invention relates to scroll compressor scroll members having a conical shaped bore in the hub into which the bearing is pressed. After insertion of the bearing, the conical shape of the bore in conjunction with the variation in distortion of the hub provides a straight bearing for the scroll member.

### Background and Summary of the Invention

Scroll type machines are becoming more and more popular for use as compressors in both refrigeration as well as air conditioning applications due primarily to their capability for extremely efficient operation. Generally, these machines incorporate a pair of intermeshed spiral wraps one of which is caused to orbit relative to the other so as to define one or more moving chambers which progressively decrease in size as they travel from an outer suction port toward a center discharge port. An electric motor is provided which operates to drive the orbiting scroll member via a suitable drive shaft affixed to the motor rotor. In a hermetic compressor, the bottom of the hermetic shell normally contains an oil sump for lubricating and cooling purposes.

Generally, the motor includes a stator which is secured to the shell of the compressor. The motor rotor rotates within the stator to impart rotation to a crankshaft which is normally press fitted within the motor rotor. The crankshaft is rotationally supported by a pair of bearings which are supported by an upper bearing housing and a lower bearing housing. The crankshaft includes an eccentric crank pin which extends into a bore defined in a hub of the orbiting scroll. Disposed between the hub of the crank pin and the inner surface of the bore is a drive bushing which rides against a bearing that is press fitted within the bore of the hub.

The hub of the orbiting scroll extends perpendicularly from a base plate of the orbiting scroll. The bore in the hub extends from the open end of the hub to a position generally adjacent the base plate of the orbiting scroll. Thus, the bore in the hub is a blind bore with the open end being positioned at the distal end of the hub and the closed end being positioned at the base plate of the orbiting scroll. During the manufacture of the orbiting scroll, the bore in the hub is machined and the bearing is press fitted within the machined bore. Because of the press fit relationship of the bearing and the bore, both the scroll hub and the bearing will deflect during the assembly of the bearing. The total amount of deflection will be determined by the overall stiffness of the hub. The deflection of the hub at the open end of the bore will be greater than the deflection of the hub at the closed end of the bore. The main reason for this unequal deflection is because the hub at the open end of the bore is unsupported while the hub at the closed end of the bore is supported by the end plate. The unequal deflection will result in an assembled bearing having a greater diameter at the open end than at the closed end. This tapered bearing will adversely affect the long term performance of the bearing life and thus the scroll machine.

JP-A-07/233790 discloses a scroll machine incorporating a scroll member having a hub which exhibits an undercut groove in the floor of the bearing-receiving bore to accommodate the drive member, but otherwise the bore is cylindrical.

A first aspect of the present invention presents a solution to the tapered bearing problem by providing a scroll member as defined in claim 1.

A second aspect of the present invention provides a method of manufacturing a scroll member as defined in claim 5.

After assembly of the bearing the unequal deflection of the scroll hub will provide an assembled bearing that is more cylindrical than the prior art systems. Thus, the more cylindrical shape will perform longer thus increasing the long term durability of both the bearing and the compressor. The more cylindrical shape increases the durability by providing a uniform clearance between the bearing and the bushing. The uniform clearance increases the load capacity of the bearing due to more uniform pressures being exerted on the bearing. Other advantages include the fact that a more uniform press load is required to assemble the bearing and this uniform press load provides a better indication of the holding pressure of the assembly. In addition, the system of the present invention is less sensitive to the dimensional variations of the individual components and this will therefore allow some broadening of the tolerances of the individual dimensions.

Other advantages and objects of the present invention will become apparent to those skilled in the art from the subsequent detailed description, appended claims and drawings.

### Brief Description of the Drawings

In the drawings which illustrate the best mode presently contemplated for carrying out the present invention:
Figure 1 is a vertical cross-sectional view through the center of a scroll type refrigeration compressor incorporating the scroll member in accordance with the present invention;
Figure 2 is an enlarged cross-sectional view of the orbiting scroll hub and bearing of the compressor shown in Figure 1;
Figure 3 is an enlarged cross-sectional view of the orbiting scroll hub shown in Figures 1 and 2, prior to assembly of the bearing illustrating the conical hub bore of the scroll member according to the present invention;
Figure 4 is an enlarged cross-sectional view similar to Figure 3 but illustrating a conical hub bore in accordance with another embodiment of the scroll member of the present invention; and
Figure 5 is an enlarged cross-sectional view similar to Figure 3 but illustrating an arcuately tapered hub bore in accordance with another embodiment of the scroll member of the present invention.

### Detailed Description of the Preferred Embodiment

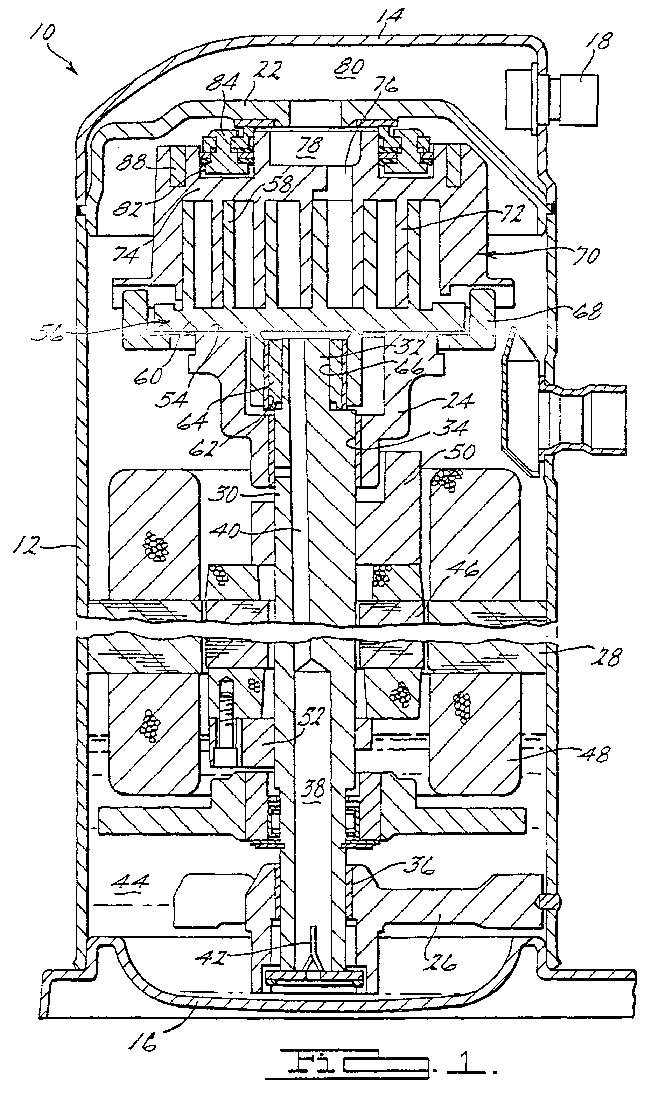

Referring now to the drawings in which like reference numerals designate like or corresponding parts throughout the several views, there is shown in Figure 1 a scroll compressor which incorporates a compensation system in accordance with the present invention which is designated generally by reference numeral 10. Compressor 10 comprises a generally cylindrical hermetic shell 12 having welded at the upper end thereof a cap 14 and at the lower end thereof a base 16 having a plurality of mounting feet (not shown) integrally formed therewith. Cap 14 is provided with a refrigerant discharge fitting 18 which may have the usual discharge valve therein (not shown). Other major elements affixed to the shell include a transversely extending partition 22 which is welded about its periphery at the same point that cap 14 is welded to shell 12, a main bearing housing 24 which is suitably secured to shell 12 by a plurality of radially outwardly extending legs and a lower bearing housing 26 also having a plurality of radially outwardly extending legs each of which is also suitably secured to shell 12. A motor stator 28 which is generally square or hexagonal in cross-section but with the corners rounded off is press fitted into shell 12. The flats between the rounded corners on stator 28 provide passageways between stator 28 and shell 12, which facilitate the return flow of lubricant from the top of the shell to the bottom.

A drive shaft or crankshaft 30 having an eccentric crank pin 32 at the upper end thereof is rotatably journaled in a bearing 34 in main bearing housing 24 and a second bearing 36 in lower bearing housing 26. Crankshaft 30 has at the lower end a relatively large diameter concentric bore 38 which communicates with a radially outwardly inclined smaller diameter bore 40 extending upwardly therefrom to the top of crankshaft 30. Disposed within bore 38 is a stirrer 42. The lower portion of the interior shell 12 defines an oil sump 44 which is filled with lubricating oil to a level slightly above the lower end of a rotor 46, and bore 38 acts as a pump to pump lubricating fluid up the crankshaft 30 and into bore 40 and ultimately to all of the various portions of the compressor which require lubrication.

Crankshaft 30 is rotatively driven by an electric motor including stator 28, windings 48 passing therethrough and rotor 46 press fitted on crankshaft 30 and having upper and lower counterweights 50 and 52, respectively.

The upper surface of main bearing housing 24 is provided with a flat thrust bearing surface 54 on which is disposed an orbiting scroll member 56 having the usual spiral vane or wrap 58 extending upward from an end plate 60. Projecting downwardly from the lower surface of end plate 60 of orbiting scroll member 56 is a cylindrical hub having a journal bearing 62 therein and in which is rotatively disposed a drive bushing 64 having an inner bore 66 in which crank pin 32 is drivingly disposed. Crank pin 32 has a flat on one surface which drivingly engages a flat surface (not shown) formed in a portion of bore 66 to provide a radially compliant driving arrangement, such as shown in assignee's U.S. Letters Patent 4,877,382.

An Oldham coupling 68 is also provided positioned between orbiting scroll member 56 and bearing housing 24 and keyed to orbiting scroll member 56 and a non-orbiting scroll member 70 to prevent rotational movement of orbiting scroll member 56. Oldham coupling 68 is preferably of the type disclosed in assignee's co-pending U.S. Letters Patent 5,320,506.

Non-orbiting scroll member 70 is also provided having a wrap 72 extending downwardly from an end plate 74 which is positioned in meshing engagement with wrap 58 of orbiting scroll member 56. Non-orbiting scroll member 70 has a centrally disposed discharge passage 76 which communicates with an upwardly open recess 78 which in turn is in fluid communication with a discharge muffler chamber 80 defined by cap 14 and partition 22. An annular recess 82 is also formed in non-orbiting scroll member 70 within which is disposed a seal assembly 84. Recesses 78 and 82 and seal assembly 84 cooperate to define axial pressure biasing chambers which receive pressurized fluid being compressed by wraps 58 and 72 so as to exert an axial biasing force on non-orbiting scroll member 70 to thereby urge the tips of respective wraps 58, 72 into sealing engagement with the opposed end plate surfaces of end plates 74 and 60, respectively. Seal assembly 84 is preferably of the type described in greater detail in U.S. Patent No. 5,156,539. Non-orbiting scroll member 70 is designed to be mounted to bearing housing 24 in a suitable manner such as disclosed in the aforementioned U.S. Patent No. 4,877,382 or U.S. Patent No. 5,102,316.

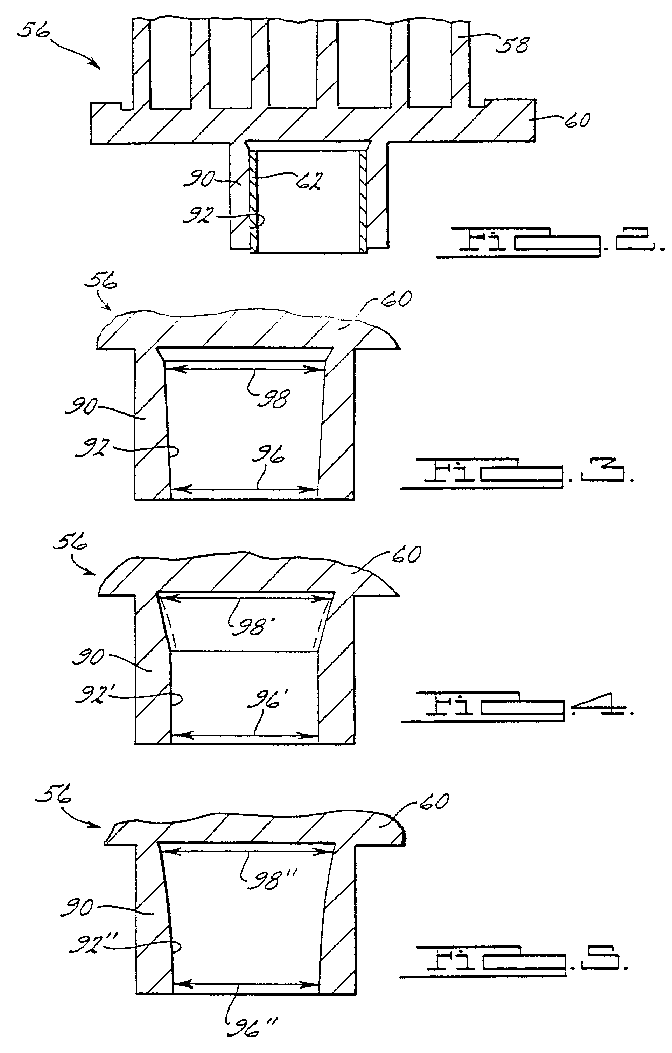

Referring now to Figures 2 and 3, the hub of orbiting scroll member 56 includes annular wall 90 which extends generally perpendicularly from end plate 60. Annular wall 90 defines an internal bore 92 within which bearing 62 is located. The manufacturing process for orbiting scroll member 56 includes the machining of bore 92 and the assembly of bearing 62 within bore 92. The dimensions for bore 92 and the dimensions for bearing 62 are chosen such that an interference fit occurs between the outside diameter of bearing 62 and the inside diameter of bore 92. Typically, the amount of interference designed into the assembly is 76 µm (.003 inches) when scroll member 56 and bearing 62 are manufactured from steel. Of course the amount of interference will change when scroll member 56 is made from a different material. These dimensions are typical for a bore diameter of approximately 30mm for bore 92.

During the assembly of bearing 62 within bore 92 both annular wall 90 and bearing 62 will deflect due to the interference fit. Typically, a steel or cast iron scroll member 56 will see annular wall 90 deflecting outward approximately 40% of the interference and bearing 62 will deflect inward approximately 60% of the interference. The relationship between the amount of deflection will change when scroll member 56 is manufactured from a different material.

Referring to Figure 3, bore 92 is illustrated. Bore 92 includes a first diameter 96 at its open end and a second diameter 98 at its closed end. The shape of bore 92 between diameters 96 and 98 is a straight line relationship and diameter 96 is smaller than diameter 98. Preferably, the difference between diameter 96 and diameter 98 is between 25.4 µm and 30.5 µm (0010 inches and .0012 inches).

Referring to Figure 4, a bore 92' is illustrated. Bore 92' includes a first diameter 96' at its open end and a second diameter 98' at its closed end. The shape of bore 92' between diameters 96' and 98' is defined by diameter 96' extending towards diameter 98' for a specified distance and then a straight line relationship as shown in a solid line or a curved relationship as shown in a dashed line between diameter 96' and 98'. Diameter 96' is smaller than diameter 98'. Preferably the difference between diameter 96' and diameter 98' is between 15.2 µm and 30.5 µm (.0006 inches and .0012 inches) with diameter 96' extending for approximately 60% of the length between the free end and the closed end of bore 92'.

Referring now to Figure 5, bore 92" is illustrated. Bore 92" includes a first diameter 96" at its open end and a second diameter 98" at its closed end. The shape of bore 92" between diameters 96" and 98" is a curved line or an arcuate surface and diameter 96" is smaller than diameter 98". Preferably, the difference between diameter 96" and 98" is between 15.2 µm and 25.4 µm (.0006 inches and .0010 inches).

While the above detailed description describes the preferred embodiment of the present invention, it should be understood that the present invention is susceptible to modification, variation and alteration without deviating from the scope and fair meaning of the subjoined claims.

## Claims

1. A scroll member (56) comprising:
a base plate (60) having a first side and a second side;
a spiral wrap (58) extending from said first side of base plate, and
a hub (90) extending from said second side of said base plate, said hub defining a bore (92), said bore having a first diameter (98; 98') located adjacent said base plate and a second diameter (96; 96') located distal from said base plate, said first diameter being greater than said second diameter, **characterised in that** said bore increases in size between said second diameter and said first diameter in a generally linear or generally arcuate manner.

2. The scroll member according to claim 1, wherein said second diameter (96') of said bore extends into said bore for a specified distance.

3. The scroll member according to claim 2, wherein said specified distance is sixty percent of a distance between said first (98') and second (96') diameters.

4. A scroll machine comprising:
a shell;
a first scroll member as claimed in any one of claims 1 to 3, disposed within said shell;
a second scroll member disposed within said shell, said second scroll member having a second spiral wrap, said second spiral wrap being intermeshed with said first spiral wrap;
a drive member for causing said scroll members to orbit relative to one another whereby their spiral wraps create pockets of progressively changing volume between a suction pressure zone and a discharge pressure zone;
said drive member being disposed within said bore; and
a bearing disposed within said bore of said hub in a press fit relationship with said hub.

5. A method of manufacturing a scroll member having a bearing press fit with a bore (92) of a hub (90), said method comprising:
machining said bore in said hub to a first diametrical dimension (98; 98') at a first end of said bore and a second diametrical dimension (96, 96') at a second end of said bore, said first diametrical (98, 98') dimension being greater than said second diametrical dimension; (96; 96') and
pressing said bearing into said bore such that deflection of said hub at said first diametrical dimension is less than deflection at said second diametrical dimension;
**characterised in that** the step of machining said bore (92) in said hub (90) machines said bore such that said bore extends generally linearly or generally arcuately between said first end and second end.

6. The method according to claim 5, wherein the step of machining said bore in said hub machines said second diametrical dimension (96') for a specified distance of said bore.

7. The method according to claim 6, wherein said specified distance is sixty percent of a dimension between said first end and said second end.

## Patentansprüche

1. Schneckenelement (56), welches umfasst:
eine Grundplatte (60) mit einer ersten Seite und einer zweiten Seite;
eine von der ersten Seite der Grundplatte ausgehende, spiralförmige Wicklung (58), und
eine von der zweiten Seite der Grundplatte ausgehende Nabe (90), die eine Bohrung (92) definiert, die einen ersten, an die Grundplatte angrenzenden Durchmesser (98; 98') und einen zweiten, von der Grundplatte entfernten Durchmesser (96; 96') aufweist, wobei der erste Durchmesser größer als der zweite Durchmesser ist, **dadurch gekennzeichnet, dass** die sich zwischen dem zweiten Durchmesser und dem ersten Durchmesser erstreckende Bohrung in allgemein linearer oder allgemein bogenförmiger Weise an Größe zunimmt.

2. Schneckenelement nach Anspruch 1, wobei der zweite Durchmesser (96') der Bohrung um einen vorgegebenen Abstand in die Bohrung hineinreicht.

3. Schneckenelement nach Anspruch 2, wobei der vorgegebene Abstand sechzig Prozent eines Abstands zwischen dem ersten (98") und dem zweiten (96') Durchmesser beträgt.

4. Schneckenmaschine, welche umfasst:
ein Gehäuse;
ein im Gehäuse untergebrachtes erstes Schneckenelement nach einem der Ansprüche 1 bis 3,
ein im Gehäuse untergebrachtes zweites Schneckenelement, welches eine zweite spiralförmige Wicklung aufweist, die mit der ersten spiralförmigen Wicklung im Eingriff steht;
ein Antriebselement, welches bewirkt, dass die Schneckenelemente einander umkreisen, wobei ihre spiralförmigen Wicklungen sich fortschreitend ändernde Volumentaschen zwischen einer Saugdruckzone und einer Verdichtungsdruckzone bilden;
wobei das Antriebselement innerhalb der Bohrung angeordnet ist; und
wobei ein innerhalb der Bohrung der Nabe angeordnetes Lager eine Presspassung mit der Nabe aufweist.

5. Verfahren zur Herstellung eines Schneckenelementes, welches eine Lagerpresspassung mit der Bohrung (92) einer Nabe (90) aufweist, wobei das Verfahren umfasst:
Bearbeiten der Bohrung in der Nabe zur Erzielung einer ersten diametralen Dimension (98;98') an einem ersten Ende der Bohrung und einer zweiten diametralen Dimension (96;96') an einem zweiten Ende der Bohrung, wobei die erste diametrale Dimension (98;98') größer als die zweite diametrale Dimension (96;96') ist, und
Einpressen des Lagers in die Bohrung derart, dass die Durchbiegung der Nabe an der ersten diametralen Dimension kleiner als die Durchbiegung an der zweiten diametralen Dimension ist;
**dadurch gekennzeichnet, dass** der Schritt des Bearbeitens der Bohrung (92) in der Nabe (90) eine Bohrung ergibt, die allgemein linear oder allgemein bogenförmig zwischen dem ersten Ende und dem zweiten Ende verläuft.

6. Verfahren nach Anspruch 5, wobei der Schritt des Bearbeitens der Bohrung in der Nabe bedeutet, dass die zweite diametrale Dimension (96') über einen vorgegebenen Abstand der Bohrung erstellt wird.

7. Verfahren nach Anspruch 6, wobei der vorgegebene Abstand sechzig Prozent einer Dimension zwischen dem ersten und dem zweiten Ende beträgt.

## Revendications

1. Elément de volute (56), comprenant :
une embase (60) ayant une première face et une seconde face ;
une enveloppe spirale (58) s'étendant depuis ladite première face de l'embase, et
un moyeu (90) s'étendant depuis ladite seconde face de ladite embase, ledit moyeu définissant un trou (92), ledit trou ayant un premier diamètre (98 ; 98') au voisinage immédiat de ladite embase et un second diamètre (96 ; 96') à distance de ladite embase, ledit premier diamètre étant plus grand que ledit second diamètre, **caractérisé en ce que** les dimensions dudit trou augmentent d'une manière globalement linéaire ou d'une manière globalement arquée entre ledit second diamètre et ledit premier diamètre.

2. Elément de volute selon la revendication 1, dans lequel ledit second diamètre (96') dudit trou se prolonge sur une distance donnée dans ledit trou.

3. Elément de volute selon la revendication 2, dans lequel ladite distance donnée est égale à 60 pour 100 d'une distance entre lesdits premier (98') et second (96') diamètres.

4. Machine à volutes, comprenant :
un carter ;
un premier élément de volute selon l'une quelconque des revendications 1 à 3, disposé dans ledit carter ;
un second élément de volute disposé dans ledit carter, ledit second élément de volute ayant une seconde enveloppe spirale, ladite seconde enveloppe spirale étant imbriquée dans ladite première enveloppe spirale ;
un élément d'entraînement servant à faire tourner lesdits éléments de volutes l'un par rapport à l'autre, grâce à quoi leurs enveloppes spirales créent des poches d'un volume changeant progressivement entre une zone de pression d'aspiration et une zone de pression de refoulement ;
ledit élément d'entraînement étant disposé à l'intérieur dudit trou ; et
un palier disposé dans ledit trou, emboîté à force dans ledit trou.

5. Procédé de fabrication d'un élément de volute ayant un palier emboîté à force dans un trou (92) d'un moyeu (90), ledit procédé comprenant les étapes consistant à :
usiner ledit trou dans ledit moyeu à une première cote de diamètre (98 ; 98') à une première extrémité dudit trou et à une seconde cote de diamètre (96, 96') à une seconde extrémité dudit trou, ladite première cote de diamètre (98, 98') étant plus grande que ladite seconde cote de diamètre (96 ; 96') et
pousser ledit palier dans ledit trou de façon que la déformation dudit trou au niveau de ladite première cote de diamètre soit inférieure à la déformation au niveau de ladite seconde cote de diamètre ;
**caractérisé en ce que** l'étape d'usinage dudit trou (92) dans ledit moyeu (90) usine ledit trou de telle sorte que ledit trou s'étende d'une manière globalement linéaire ou globalement arquée entre lesdites première extrémité et seconde extrémité.

6. Procédé selon la revendication 5, dans lequel l'étape d'usinage dudit trou dans ledit moyeu usine ladite seconde cote de diamètre (96') pour une distance donnée dudit trou.

7. Procédé selon la revendication 6, dans lequel ladite distance donnée est égale à 60 pour 100 d'une dimension entre ladite première extrémité et ladite seconde extrémité.
